(19) Europäisches Patentamt
European Patent Office
Office européen des brevets

(11) **EP 4 310 789 A1**

(12) **EUROPEAN PATENT APPLICATION**

(43) Date of publication:
**24.01.2024 Bulletin 2024/04**

(21) Application number: **23184451.5**

(22) Date of filing: **10.07.2023**

(51) International Patent Classification (IPC):
*G06V 10/44* (2022.01)   *G06V 10/82* (2022.01)
*G06V 20/58* (2022.01)   *G06V 20/64* (2022.01)
*G06V 10/77* (2022.01)

(52) Cooperative Patent Classification (CPC):
**G06V 20/64; G06V 10/454; G06V 10/7715;
G06V 10/82; G06V 20/58**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.07.2022 CN 202210853238**

(71) Applicant: **Beijing Tusen Zhitu Technology Co.,
Ltd.
Beijing 100016 (CN)**

(72) Inventors:
• **FAN, Lue
Beijing, 100016 (CN)**
• **WANG, Feng
Beijing, 100016 (CN)**
• **WANG, Naiyan
Beijing, 100016 (CN)**

(74) Representative: **Murgitroyd & Company
Murgitroyd House
165-169 Scotland Street
Glasgow G5 8PL (GB)**

(54) **PREDICTION METHOD FOR TARGET OBJECT, COMPUTER DEVICE, AND STORAGE MEDIUM**

(57) The embodiments of the description provide a prediction method for a target object, a computer device, and a storage medium. The method includes: performing a voxelization processing on point cloud data to obtain a plurality of voxels, wherein the plurality of voxels correspond to a plurality of points in the point cloud data, and at least a portion of the plurality of voxels forms a voxel set; extracting a plurality of voxel features from the voxels in the voxel set; mapping the plurality of voxel features to a plurality of points included in the plurality of voxels, respectively, to obtain a plurality of point features of the plurality of points; and predicting, according to the plurality of point features, the target object.

FIG. 2

**Description**

**TECHNICAL FIELD**

Embodiments of the description relate to the field of image processing, and in particular, to a prediction method for a target object, a computer device, and a storage medium.

**BACKGROUND**

At present, a LiDAR is a scanning sensor adopting the non-contact laser ranging technology, which has a similar working principle to that of a general radar system. Specifically, a target is detected by emitting laser beams, and point cloud data are formed by collecting the reflected beams and may sense the spatial range of the target object after certain processing. Therefore, the LiDAR is widely applied to the field of intelligent driving.

In the prior art, the point cloud data are mainly converted into dense voxel data; voxel features of the dense voxels are extracted; and calculation is performed on a dense voxel feature map. The calculation method requires a large computation cost for data in a larger spatial range, which is not conducive to the quick sensing of a remote target object.

**SUMMARY**

A plurality of embodiments of the description provide a prediction method and apparatus for a target object, a computer device, and a storage medium, to provide a method for improving the prediction efficiency of the target object.

One embodiment of the description provides a prediction method for a target object, which includes: performing a voxelization processing on point cloud data to obtain a plurality of voxels, wherein the plurality of voxels correspond to a plurality of point data in the point cloud data, and at least a portion of the plurality of voxels forms a voxel set; extracting voxel features of the voxels in the voxel set to obtain a plurality of voxel features; mapping the plurality of voxel features to a plurality of point data included in the plurality of voxels, respectively, to obtain a plurality of point data features of the plurality of point data; and predicting, according to the plurality of point data features, the target object.

One embodiment of the description provides a prediction apparatus for a target object, which includes: a point cloud data voxelization processing module, configured to perform a voxelization processing on point cloud data to obtain a plurality of voxels, wherein the plurality of voxels correspond to a plurality of point data in the point cloud data, and at least a portion of the plurality of voxels forms a voxel set; a voxel feature extraction module, configured to extract voxel features of the voxels in the voxel set to obtain a plurality of voxel features; a voxel feature mapping module, configured to map the plurality of voxel features to a plurality of point data included in the plurality of voxels, respectively, to obtain a plurality of point data features of the plurality of point data; and a target object prediction module, configured to predict, according to the plurality of point data features, the target object.

One embodiment of the description provides a computer device, which includes a memory and a processor. The memory has a computer program stored thereon, and the processor, when executing the computer program, implements the method according to any one of the above embodiments.

One embodiment of the description provides a computer-readable storage medium having a computer program stored thereon. The computer program, when executed by a processor, implements the method according to any one of the above embodiments.

In a plurality of embodiments provided by the description, point cloud data, after a voxelization processing, are converted into voxel data; a voxel feature of a voxel is extracted; the voxel feature is mapped to point cloud data included in a voxel corresponding to the voxel feature to obtain a plurality of point data features; and the target object is predicted according to the point data features, so that the prediction efficiency of the target object is improved.

**BRIEF DESCRIPTION OF THE DRAWINGS**

FIG. 1 is a schematic diagram illustrating point cloud data acquired by a LiDAR according to one embodiment of the description.

FIG. 2 is a schematic flowchart illustrating a prediction method for a target object according to one embodiment of the description.

FIG. 3 is a schematic diagram illustrating a prediction system for a target object according to one embodiment of the description.

FIG. 4 is a schematic flowchart illustrating a prediction method for a target object according to one embodiment of the description.

FIG. 5 is a schematic diagram illustrating a first prediction point data set feature according to one embodiment of the description.

FIG. 6 is a schematic diagram illustrating a prediction apparatus for a target object according to one embodiment of the description.

FIG. 7 is a schematic diagram illustrating a computer device according to one embodiment of the description.

**DETAILED DESCRIPTION**

The technical solutions in the embodiments of the description will be clearly and completely described below with reference to the drawings in the embodiments of the description. It is obvious that the described embodiments are only part of the embodiments of the description, rather than all of the embodiments. All other embodiments obtained by those of ordinary skill in the art without making any creative effort on the basis of the embodiments of the description shall fall within the protection scope of the description.

BRIEF OVERVIEW

In the related art, converting sparse point clouds into dense voxels is a common method for point cloud processing, which enables a detector to easily utilize efficient convolution operation and overcome the difficulties caused by sparse features on object detection. The method is a mainstream paradigm for point cloud-based 3D object detection in current autonomous driving scenes. Because the calculation is to be performed on the dense feature map, the paradigm has extremely high calculation cost in large-range point clouds, which is not conducive to the efficient remote sensing in an autonomous driving system. However, if the dense feature map in the detectors is directly removed, the problem of missing the center feature of the object is caused. The detectors based on point representation of sparse 3D objects perform feature extraction and prediction directly on the point representation. This approach involves multiple field point searches of quadratic complexity and usually requires down-sampling the number of point clouds to a small fixed number. This compromises the efficiency and flexibility of the detectors, making it difficult to apply them directly to a practical system.

Therefore, it is necessary to provide a prediction method for a target object, which may perform processing on sparse point clouds, without converting sparse point clouds into dense voxels, and without performing feature extraction and prediction directly on the point representation. The method includes: performing a voxelization processing on point cloud data to obtain a plurality of voxels, wherein the plurality of voxels correspond to a plurality of point data in the point cloud data, and at least a portion of the plurality of voxels forms a voxel set; extracting voxel features of the voxels in the voxel set to obtain a plurality of voxel features; mapping the plurality of voxel features to a plurality of point data included in the plurality of voxels, respectively, to obtain a plurality of point data features of the plurality of point data; and predicting, according to the plurality of point data features, the target object, so as to solve the technical problem of low efficiency in predicting the target object.

SCENE EXAMPLE

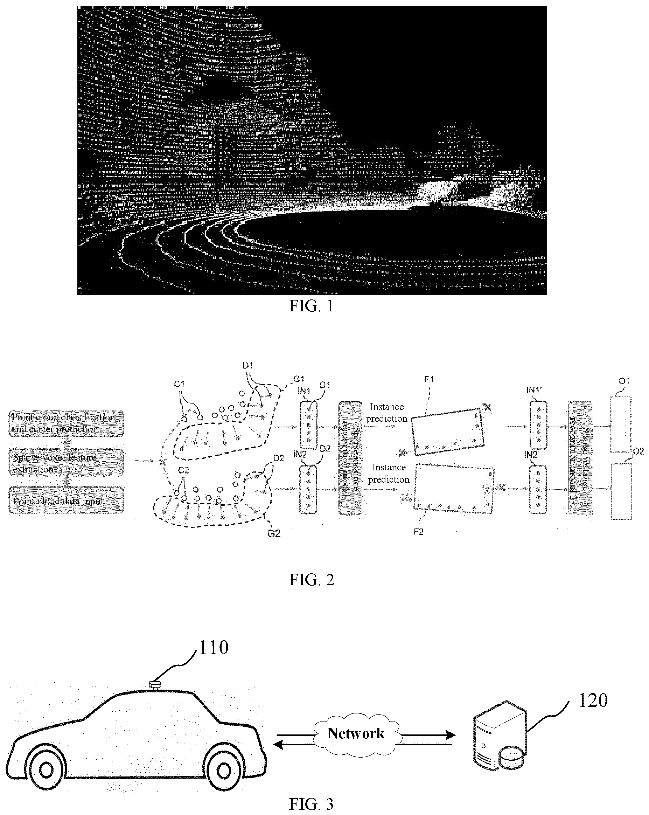

An application scene example of a prediction system for a target object is provided in the description. In the process of vehicle traveling, a vehicle-borne LiDAR arranged on a vehicle may acquire the point cloud data of the surrounding environment of the vehicle according to a certain time interval. Certainly, the point cloud data of the surrounding environment of the vehicle may also be acquired at a certain distance interval in the process of vehicle traveling. Please refer to FIG. 1. After acquiring the point cloud data, the vehicle-borne LiDAR may send the point cloud data to a server through the network. After acquiring the point cloud data, the server may divide the point cloud data into a plurality of grids $l_x \times l_y \times l_z$ according to a spatial range. One grid may be one voxel. Then, refer to the steps from point cloud data input to sparse voxel feature extraction in FIG. 2. For each voxel, a deep learning model, e.g., a PointNet point cloud feature extractor, may be used to extract point cloud features on the basis of the point cloud data, so as to obtain a voxel set with initial voxel features.

Please refer to FIG. 2. After obtaining the voxel set with the initial voxel features, the initial voxel features may be input into a sparse convolution-based network to obtain voxel features. After obtaining the voxel features, the point data features may be formed, by mapping a voxel feature to point clouds included in a voxel corresponding to the voxel feature, and combining the point cloud data with a geometric feature of the center of the voxel to which the point cloud data belong.

Refer to the steps from sparse voxel feature extraction to point cloud classification and center prediction in FIG. 2. After acquiring the point data features, the server may input the point data features into a Multilayer Perceptron (MLP) to classify the point data, so as to obtain a plurality of foreground point data, and perform clustering processing on the plurality of foreground point data by using a clustering algorithm to obtain a first prediction point data set belonging to the target object, wherein the first prediction point data set includes a plurality of point data corresponding to the target object. Specifically, the plurality of foreground point data may be grouped by clustering to obtain the groups of instances, e.g., a prediction point data set G1 belonging to a first target object, a prediction point data set G2 belonging to a second target object, or other prediction point data sets. A plurality of point data D1 corresponding to the first target object is included in the prediction point data set G1, and a plurality of point data D2 corresponding to the second target object is included in the prediction point data set G2.

Then, instance feature extraction and instance prediction may be performed through a sparse instance recognition model. Specifically, instance features may be extracted from the plurality of point data by using algorithms for dynamic pooling and dynamic broadcasting. The dynamic pooling method may include weighting and summing the point data features in the first prediction point data set G1 to obtain a first instance feature, then assigning the first instance feature to the point data features in the first prediction point data set, and obtaining, according to the difference between the first instance feature and the point data features, a first target feature. As such, the above processes of dynamic pooling and dynamic broadcasting are repeated continuously and alternately multiple times to obtain the first target feature, which is used as a first prediction point data set feature. For example, an instance feature of a first instance IN1 may be extracted from the plurality of point data D1 by using the above algorithms for dynamic pooling and dynamic broadcasting, and an instance prediction for the first instance IN1 may be performed. In addition, an instance feature of a second instance IN2 may be extracted from the plurality of point data D2 by using the above algorithms for dynamic pooling and dynamic broadcasting, and an instance prediction for the second instance IN2 may be performed.

The method for extracting the first prediction point data set feature may further include repeating the above processes of dynamic pooling and dynamic broadcasting multiple times on coordinate vectors (x, y, z) of the point data to obtain a second target feature, and fusing the first target feature and the second target feature to obtain a third target feature, which is used as the first prediction point data set feature. A candidate prediction box for the target object is framed on the basis of the first prediction point data set feature. Specifically, FIG. 2 depicts a candidate prediction box F1 for the first target object (the first instance IN1) framed on the basis of the prediction point data set feature representing the prediction point data set G1, and a candidate prediction box F2 for the second target object (the second instance IN2) framed on the basis of the prediction point data set feature representing the prediction point data set G2. Data points outside the candidate prediction box F1 and the candidate prediction box F2 will be excluded from the corresponding target objects, while data points within the candidate prediction box F 1 and the candidate prediction box F2 will be included in the corresponding target objects.

After obtaining the prediction boxes for the target objects, the server will perform the above processes of dynamic pooling and dynamic broadcasting repeatedly and alternately multiple times again on the foreground point data (e.g., the foreground point data outside the candidate prediction boxes and excluded therefrom and the foreground point data within the candidate prediction boxes and included therein) included in the candidate prediction boxes (e.g., the candidate prediction box F 1 and the candidate prediction box F2), so as to correct the candidate prediction boxes, and further obtain corrected instances (a first instance IN1' and a second instance IN2'). According to the corrected instances, more accurate candidate prediction boxes may be obtained, and the prediction boxes for the target objects (e.g., target object O1 and object O2) are further obtained to predict the target objects. Through the above embodiments, the interference of background noise may be eliminated, and thus the accuracy of target object prediction is improved. Finally, the server may send the prediction box to a control system of a vehicle in an intelligent driving process, so that the vehicle may timely judge whether it is necessary to take braking measures, honk a horn, and the like.

SYSTEM ARCHITECTURE

Please refer to FIG. 3. The embodiments of the description provide a prediction system for a target object. The prediction system for the target object may include a data acquisition device 110 and a server 120. The data acquisition device 110 may be a LiDAR having a network access capability and installed on a vehicle capable of intelligent driving. Specifically, for example, the data acquisition device 110 may be a scanning device such as a LiDAR to obtain point cloud data by scanning. The LiDAR may be a vehicle-borne LiDAR, an airborne LiDAR, a spaceborne LiDAR, a station LiDAR, a mobile LiDAR, or the like. The server 120 may be an electronic device having a certain computation processing capability, which may have a network communication module, a processor, a memory, and the like. Certainly, the server may also refer to software running on the electronic device. The server 120 may also be a distributed server, which may be a system with multiple processors, memories, network communication modules, and the like operating in coordination. Alternatively, the server 120 may also be a server cluster formed by several servers. Alternatively, with the development of science and technology, the server 120 may also be a new technical means capable of implementing the corresponding functions of the embodiments of the description. For example, it may be a new form of "server" based on quantum computing implementations.

EXAMPLE METHOD

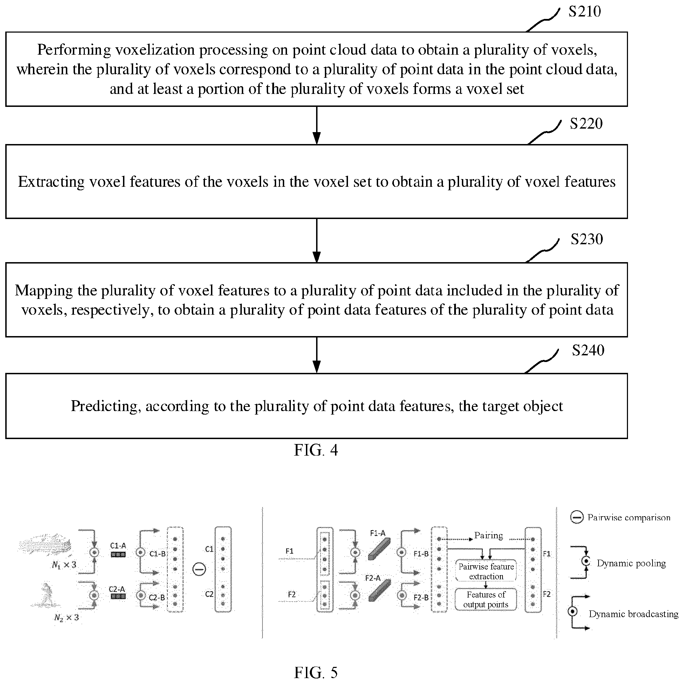

Please refer to FIG. 4. One embodiment of the description provides a prediction method for a target object. The prediction method for the target object may be applied to a server. The prediction method for the target object may include the following steps.

Step S210: performing a voxelization processing on point cloud data to obtain a plurality of voxels, wherein the plurality of voxels correspond to a plurality of point data in the point cloud data, and at least a portion of the plurality of voxels forms a voxel set.

In some cases, in the process of recognizing a target object by using point cloud data, the point cloud data needs to be converted into gridded data with a certain size. Therefore, the point cloud data can be first converted into volume data that can represent the range of an object.

The point cloud data may be a set of vectors in a three-dimensional coordinate system. The method for acquiring the point cloud data may include scanning through a LiDAR. Scanned data obtained by scanning are recorded in the form of points, and each of the points contains a three-dimensional coordinate. Certainly, the point cloud data may also include information such as color, reflectivity, and intensity that represents attributes of the scanned object. Certainly, the point cloud data may also be a set of vectors in a two-dimensional coordinate system.

According to the method for the voxelization processing, the point cloud data can be divided into grids according to a spatial range, so that the point cloud data can be stored in a memory in order, which is conducive to reducing random memory access and increasing data computation efficiency. After voxels are obtained by voxelization of the point cloud data, a spatial convolution operation can be efficiently performed on the voxels, which is conducive to the extraction of multi-scale and multi-level local features. In another aspect, after the voxelization processing, down-sampling processing can be effectively performed on the point cloud data, which is suitable for processing the point cloud data of large order of magnitude.

The voxels may be pixels in a three-dimensional space. Specifically, the size of the voxels may be set in advance to obtain, e.g., a cube of 5 cm × 5 cm × 5 cm, a cube of 30 cm × 30 cm × 30 cm, any cube with length of sides between 5 cm and 30 cm, or a cube of other sizes. That is, one voxel can include several data points in the original point cloud data.

The voxel set includes a plurality of voxels. The voxels in the voxel set include point cloud data in the spatial range. Specifically, for example, if there is one voxel with a coordinate ranging from (0,0,0) to (1,1,1), and one of the point cloud data has a coordinate vector of (0.5,0.5,0.5), the voxel may belong to the voxel set. If there is no point cloud data in the spatial range of (0,0,0) - (1,1,1), the voxel does not belong to the voxel set.

Step S220: extracting voxel features of the voxels in the voxel set to obtain a plurality of voxel features.

In some cases, the voxel features may be used for classification of the voxels or segmentation of the target object. Therefore, in order to predict the target object through the point cloud data, the voxel features may be extracted first.

The voxel features may be obtained by performing convolution and pooling operations on the point cloud data in each voxel grid. Specifically, for example, the method for extracting the voxel features may include first using a common point cloud feature extractor such as PointNet to perform feature extraction to obtain initial voxel features; then, inputting the initial voxel features into a common sparse voxel encoder (such as a sparse convolution-based network and a sparse attention network) and the like, to extract the voxel features.

Step S230: mapping the plurality of voxel features to a plurality of point data included in the plurality of voxels, respectively, to obtain a plurality of point data features of the plurality of point data.

In some cases, if the feature extraction is directly performed on the point cloud data, the extracted features of the point cloud data may be poor, which directly affects the results of classification of the point cloud data or segmentation of the point cloud data. Since the point cloud data included in the voxel set are similar to the voxel features, the voxel feature of a voxel obtained after the voxelization processing can be mapped to the point cloud data included in the voxel.

The point data may be initial point cloud data. The point data may also be smaller voxels further divided on the basis of the currently divided voxels. Since a smaller voxel represents a smaller spatial range, this smaller voxel can be considered one point datum. There is little difference between the central vector (center of mass) of a smaller voxel and the vector of the point cloud data included in the voxel.

The point data features are those obtained by mapping a voxel feature to point clouds included in a voxel corresponding to the voxel feature. Specifically, for example, if four point data are included in one voxel, the four point data have the same point data feature as the voxel feature of the voxel. Certainly, in order to distinguish the four point data, it is also possible to add relative coordinates of the four point data with respect to the center of the voxel to which the four point data belong to the point data features.

Certainly, the point data features may also be obtained through a certain interpolation algorithm, such as an inverse distance-weighted interpolation algorithm, a linear interpolation method, a bilinear interpolation method, and a Kriging interpolation method. Specifically, for example, the step of finding the point data features using the inverse distance-weighted interpolation method may be: determining a reference pixel (i.e., voxel) to be used for the point data, calculating the distance between the vector of the point data and the central vector of the voxel, and using the following formula:

$$\hat{Z}(S_0) = \sum_{i=1}^{N} \lambda_i Z(S_i) \qquad \text{(formula 1)}$$

where $\hat{Z}(S_0)$ represents features of point data to be interpolated, $Z(S_i)$ represents an attribute value of a reference pixel, N represents the number of the selected reference pixels, and $\lambda_i$ represents a weight coefficient calculated according to the reciprocal of the distance.

Step S240: predicting, according to the plurality of point data features, the target object.

In some cases, if the feature extraction of the point cloud data and the prediction are performed directly by a detector of points, the point cloud data needs to be down-sampled to a small amount, which damages the efficiency and flexibility of the detector to a certain extent. Therefore, the voxel features can be used as point data features after being assigned to the point data features, so that the features of the point clouds are enriched to a certain extent, and thus the accuracy of the target object prediction can be improved to a certain extent.

The prediction method for the target object includes performing a voxelization processing on point cloud data to obtain a plurality of voxels, wherein the plurality of voxels correspond to a plurality of point data in the point cloud data, and at least a portion of the plurality of voxels forms a voxel set; extracting voxel features of the voxels in the voxel set to obtain a plurality of voxel features; mapping the plurality of voxel features to a plurality of point data included in the plurality of voxels, respectively, to obtain a plurality of point data features of the plurality of point data; and predicting, according to the plurality of point data features, the target object, so as to solve the technical problem of low efficiency in predicting the target object.

In some embodiments, the step of performing the voxelization processing on the point cloud data to obtain the plurality of voxels may include: dividing, according to a spatial coordinate range of the point cloud data, the point cloud data into the plurality of voxels by a specified resolution; and on the basis of the point cloud data, extracting initial voxel features of the plurality of voxels.

In some cases, the point cloud data may be in an unordered form with a large data volume, so there is a certain difficulty in directly performing feature extraction on the point cloud data. Therefore, in order to change the point cloud data into ordered data with a small data volume, the voxelization processing can be performed on the point cloud data, which is conducive to the extraction of multi-scale and multi-level local feature information to a certain extent.

The method for performing the voxelization processing on the point cloud data may include determining, according to the minimum value and the maximum value of all of the point cloud data in three coordinate directions of X, Y, and Z, the smallest cuboid containing all of the point cloud data; setting, according to the size of the smallest cuboid and the resolution requirement, the size of a voxel, and dividing, according to the size of the voxel, the smallest cuboid into a plurality of voxels; and determining a voxel where each point in the point cloud data is located, and only displaying voxels containing the point cloud data after traversing all points of the point cloud data.

The initial voxel features may be extracted by using a common point cloud feature extractor. Specifically, for example, PointNet may be used to extract initial point cloud features. The PointNet is a neural network architecture that can process the point cloud data in an end-to-end manner. The PointNet includes two alignment networks, namely T-Net for aligning input data (input transform) and T-Net for aligning features (feature transform). They are recorded as T-Net-1 and T-Net-2, respectively. An output of T-Net-1 is a transformation matrix of 3×3 used for transforming an input (xyz). An output of T-Net-2 is a matrix of 64×64 used for aligning a feature space, such that a transformation matrix A of the feature space is as close to an orthogonal matrix as possible. Certainly, in the embodiments of the description, the method for extracting the initial voxel features is not limited. The method for extracting the initial voxel features may also be VoxelNet, FaFNet, PointNet++, VoteNet, PointTrackNet, and the like.

In some embodiments, the step of extracting the voxel features of the voxels in the voxel set to obtain the plurality of voxel features may include: inputting the initial voxel features into a preset sparse voxel encoder to extract the voxel features.

In some cases, in order to enrich the extracted features, a sparse voxel encoder may be used to extract the voxel features.

The method for inputting the initial voxel features into the preset sparse voxel encoder to extract the voxel features may be performed by using a common sparse voxel encoder. Specifically, for example, the voxels included in the voxel set are first represented in the form of a sparse matrix, and then the sparse matrix is input into a 3D convolution network, for example, a sparse convolution-based network, to extract the features.

In some embodiments, the step of mapping the plurality of voxel features to the plurality of point data included in the plurality of voxels, respectively, to obtain the plurality of point data features of the plurality of point data may include: mapping the voxel features of the voxels in the voxel set, to point data included in voxels corresponding to the voxel features, to obtain initial point data features; calculating geometric features between the point data and centers of the voxels corresponding to the point data; and on the basis of the initial point data features and the geometric features, generating the point data features of the point data.

In some cases, since one voxel in the voxel set may include a plurality of point cloud data, if the voxel features are directly mapped to the point cloud data included in the voxel, the resulting point data features may be repeated. Therefore, in order to distinguish point cloud data included in one voxel, the geometric dimension of the point data can be increased, so that the acquired point data features can be distinguished.

The initial point data features may be obtained by directly mapping the voxel features to the point cloud data. The geometric features may be relational features between the point cloud data and the voxel to which the point cloud data belong. Specifically, for example, a distance relationship between the point cloud data and voxel data may be obtained according to the difference between the coordinate vectors of the point cloud data and the coordinate vector of the center of the voxel to which the point cloud data belong. Certainly, the geometric features may also include angles between straight lines connecting the point cloud data and the center of the voxel and a horizontal direction or a vertical direction or a certain specified direction.

In some embodiments, the step of predicting, according to the plurality of point data features, the target object includes: predicting, on the basis of the plurality of point data features, a plurality of point data belonging to a foreground of the target object, to obtain a plurality of foreground point data; performing clustering processing on the plurality of foreground point data to obtain a first prediction point data set belonging to the target object, wherein the first prediction point data set includes a plurality of point data corresponding to the target object; extracting point data features of the plurality of point data in the first prediction point data set to obtain a first prediction point data set feature; and on the basis of the first prediction point data set feature, predicting the target object.

In some cases, in order to achieve the prediction of the target object, one or more of an edge-based method, a region segmentation-based method, an attribute-based method, and a model-based method are generally adopted directly for the prediction. However, the point cloud-based segmentation method is prone to poor features extracted by the prediction method for the target object, and thus cannot be directly applied to the feature extraction. Therefore, the voxel features can be mapped to the point clouds to obtain point data features, and then the prediction is performed on the basis of the point data features.

The foreground point data are point cloud data representing the target object. Specifically, for example, the point cloud data obtained by scanning using a vehicle-borne LiDAR include buildings, trees, the ground, pedestrians, obstacles, and the like. Because the vehicle will be affected by the obstacles, the pedestrians, and the like during traveling, it is necessary to honk a horn or take an avoidance measure. Certainly, in some cases, ground data can also be used as foreground point cloud data to recognize lane lines, thus alerting the vehicle to the need for immediate lane changes during running.

The method for the clustering processing may be a process of classifying foreground point clouds, in which the point cloud data representing the same target object are clustered. Specifically, for example, the point cloud data are divided into n categories in advance and n objects are randomly selected as initial clustering centers. Then, the distance between each of the objects and each of the clustering centers is calculated, and each of the objects is assigned to the clustering center closest to the object. The cluster centers and the objects assigned to them represent a cluster.

Each time one sample is assigned, the cluster center of a cluster is recalculated on the basis of the existing objects in the cluster. This process will be repeated until a certain termination condition is met. The termination condition may be that no (or a minimum number of) objects are reassigned to different clusters, no (or a minimum number of) cluster centers are changed again, or the sum of squared errors is locally minimal. Certainly, the method for the clustering processing may also be a hierarchy-based clustering method, a grid-based clustering method, a maxi-min distance clustering method, a graph theory clustering method, or the like.

The first prediction point data set is a set of point cloud data representing the same target object. Specifically, for example, the foreground point data are clustered to obtain six categories of pedestrian A, pedestrian B, vehicle A, vehicle B, obstacle A, and obstacle B, and the first prediction point data set may be one of the pedestrian A, the pedestrian B, the vehicle A, the vehicle B, the obstacle A, and the obstacle B. The first prediction point data set feature includes features of the same target object. Specifically, for example, if an obstacle includes a plurality of point cloud data features, the feature of the obstacle may be a feature of a new point obtained from the features of the point cloud data representing the obstacle according to a certain algorithm (such as averaging) or the like, which is used as the first prediction point data set feature.

In some embodiments, the step of predicting, on the basis of the plurality of point data features, the plurality of point data belonging to the foreground of the target object, to obtain the plurality of foreground point data may include:

predicting a type of a target object corresponding to the plurality of point data by using the plurality of point data features; and on the basis of the type of the target object, determining the plurality of foreground point data.

In some cases, if the point cloud data are directly divided into foreground points and background points by using a binary classification method, the case of misclassification may be caused by the difference in the properties of the point clouds. Therefore, the point data may be divided into a plurality of categories, each of which represents a different target object.

The type of the target object may be an obstacle, a pedestrian, a tree, a lane, a building, or the like.

In some embodiments, the step of performing clustering processing on the plurality of foreground point data to obtain the first prediction point data set belonging to the target object may include: determining a plurality of center point data representing the target object (e.g., a plurality of center point data C1 representing a first target object and a plurality of center point data C2 representing a second target object, as shown in FIG. 2), wherein the center point data represent a center of the target object to which the foreground point data are predicted to belong; separately calculating distances among the plurality of center point data; and adding at least one of the plurality of foreground point data meeting a condition to the first prediction point data set, wherein the condition is that the distances are less than or equal to a preset distance. Specifically, in FIG. 2, since the distances among the plurality of center point data C1 are smaller than or equal to the preset distance, a plurality of foreground point data (a plurality of point data D1) corresponding to these center point data C1 are added to the first prediction point data set G1. Since the distances among the plurality of center point data C2 are smaller than or equal to the preset distance, a plurality of foreground point data (a plurality of point data D2) corresponding to these center point data C2 are added to the second prediction point data set G2. Furthermore, since the distance between the center point data C1 and the center point data C2 is greater than the preset distance, the foreground point data corresponding to the center point data C1 will not be added to the second prediction point data set G2, and the foreground point data corresponding to the center point data C2 will not be added to the first prediction point data set G1.

In some cases, in the process of clustering the point clouds, the centers with all foreground points predicted can be used as nodes, and the distances between the points can be used as the weights of the edges to construct a graph structure. If the distance between two points is less than a certain threshold, the two points are considered to be connected. The connected component algorithm in graph theory is used to find all connected components in the graph. Each connected component found is considered an instance. Thus, each foreground point has its unique instance identifier, which indicates to which instance the point belongs.

Please refer to FIG. 5. In some embodiments, the step of extracting the point data features of the plurality of point data in the first prediction point data set to obtain the first prediction point data set feature may include: on the basis of a first weight coefficient, calculating a first instance feature of the point data in the first prediction point data set; and on the basis of a relationship between the point data features of the point data in the first prediction point data set and the first instance feature, obtaining a first target feature, wherein the first target feature is used as the first prediction point data set feature.

In some cases, after the instance identifier of each data point is obtained, in order to obtain the first prediction point data set feature, the point data features may be fused according to a preset weight coefficient to obtain an instance feature, and then the first prediction point data set feature may be obtained according to the difference between the instance feature and the point data features.

The first instance feature is obtained by fusing the point data features of the point data in the first prediction point data set. Specifically, for example, if an instance includes 1000 pieces of point data, features of the 1000 pieces of point data may be averaged to obtain an average feature, and then the average feature is used as an instance feature. Certainly, the instance feature may also be obtained by fusing the features of the 1000 pieces of point data according to a certain weight coefficient.

The first target feature may be the difference between the instance feature and the point data features. Specifically, for example, the instance feature may be assigned to the features of the 1000 pieces of point data by broadcasting. Then, the difference between the feature of each of the 1000 pieces of point data and the instance feature is calculated respectively to obtain the first target feature. Certainly, the instance feature and the first target feature may be iterated multiple times, that is, the first target feature may be used as a new point data feature, and then the above processes of dynamic pooling and dynamic broadcasting are repeated on the basis of the new point data feature, so as to finally obtain a first target feature data. Specifically, for example, in FIG. 5, Instance 1 (with a coordinate vector of C1) and Instance 2 (with a coordinate vector of C2) are extracted by the method described in the above embodiments; an average coordinate vector of data points in Instance 1 is calculated to obtain C1-A and an average coordinate vector of data points in Instance 2 is calculated to obtain C2-A; C1-A is assigned to the data points in Instance 1, and C2-A is assigned to the data points in Instance 2; and the difference between C1 and C1-A is calculated to obtain coordinate features of new point data. Meanwhile, the features of the extracted point data in Instance 1 (the feature of the point data included in Instance 1 is F 1) and Instance 2 (the feature of the point data included in Instance 2 is F2) are averaged to obtain F1-A and F2-A; F1-A and F2-A are assigned to the point data in Instance 1 and Instance 2, respectively, to obtain F1-B and F2-B; and F1-B and F1 are subjected to matching computation, and F2-B and F2 are subjected to matching computation to obtain the new point data feature. The above processes of extracting the coordinate features of the coordinates of the point data and extracting the point data features are repeated multiple times, and finally, the coordinate features of the new point data and the new point data features are fused to obtain the first prediction point data set features of Instance 1 and Instance 2.

In some embodiments, on the basis of a second weight coefficient, weighted coordinates of the point data in the first prediction point data set are calculated; the difference between coordinates and the weighted coordinates of the point data in the first prediction point data set is determined to obtain a second target feature; and the first target feature and the second target feature are fused to obtain a third target feature, wherein the third target feature is used as the first prediction point data set feature.

In some cases, the first prediction point data set feature obtained by simply performing computation on the point data features may be not rich enough. Therefore, features of the coordinate dimension may also be added to the process of acquiring the first prediction point data set feature.

The second target feature may be an average of the coordinate vectors of the point data in the instance. Specifically, for example, if the coordinate vectors of 5 points are (1,1,1), (2,2,2), (3,3,3), (4,4,4), and (5,5,5), respectively, the second target feature may be (3,3,3).

The third target feature is a result obtained after the first target feature and the second target feature are fused. Specifically, for example, if the first target feature is a 128-dimensional vector and the second target feature is a 3-dimensional vector, the third target feature may be a 13 1-dimensional vector obtained by splicing the first target feature and the second target feature.

In some embodiments, the prediction method for the target object may further include: on the basis of the first prediction point data set feature, generating a prediction box indicating that an object is predicted to be the target object, wherein at least one of the plurality of foreground point data within the prediction box is used as a second prediction point data set; calculating a second instance feature of the point data in the second prediction point data set by using a third weight coefficient; on the basis of the difference between the point data features of the point data in the second prediction point data set and the second instance feature, obtaining a fourth target feature; and adjusting, according to the fourth target feature, the predicted target object.

In some cases, the results after one target object recognition may be not accurate enough. Therefore, a spatial range of the target object can be framed after the first target object recognition, and then a prediction box is corrected or adjusted by using the above processes of dynamic pooling and dynamic broadcasting again for the foreground point data in the spatial range. In some embodiments, the above correction or adjustment process may be performed multiple times.

The second prediction point data set is the foreground point data included in the prediction box. Specifically, for example, a point A1 is excluded from the category A for computation in the clustering process, and a point A2 is included in the category A. However, the resulting prediction box includes the point A1 and does not include the point A2. Therefore, the point A1 should be included in the second prediction point data and the point A2 should be excluded.

The second instance feature is obtained after the features of the foreground point data included in the prediction box are processed according to the weight coefficients. The fourth target feature is derived from the difference between the second instance feature and the point data feature in the second prediction point data set.

EXAMPLE APPARATUS, ELECTRONIC DEVICE, STORAGE MEDIUM, AND SOFTWARE

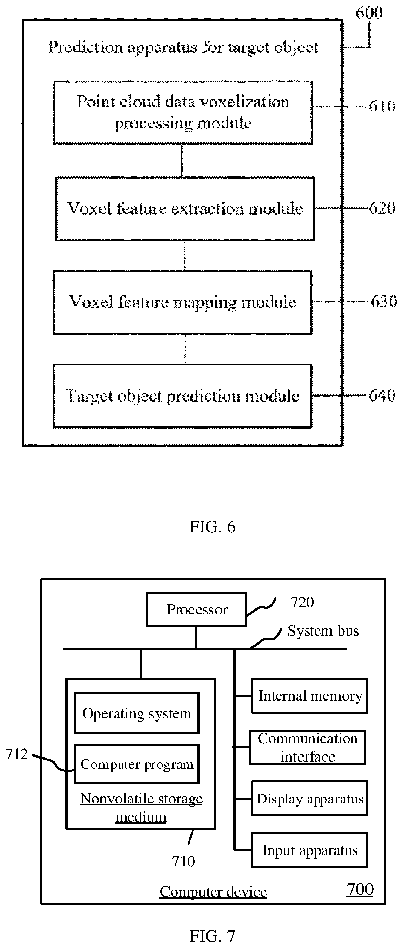

Please refer to FIG. 6. One embodiment of the description further provides a prediction apparatus 600 for a target object. The prediction apparatus 600 for the target object may include a point cloud data voxelization processing module 610, a voxel feature extraction module 620, a voxel feature mapping module 630, and a target object prediction module 640.

The point cloud data voxelization processing module 610 is configured to perform a voxelization processing on point cloud data to obtain a plurality of voxels, wherein the plurality of voxels correspond to a plurality of point data in the point cloud data, and at least a portion of the plurality of voxels forms a voxel set.

The voxel feature extraction module 620 is configured to extract voxel features of the voxels in the voxel set to obtain a plurality of voxel features.

The voxel feature mapping module 630 is configured to map the plurality of voxel features to a plurality of point data included in the plurality of voxels, respectively, to obtain a plurality of point data features of the plurality of point data.

The target object prediction module 640 is configured to predict, according to the plurality of point data features, the target object.

For specific limitations of the prediction apparatus for the target object, reference may be made to the limitations of the above prediction method for the target object, which will not be repeated here. The modules in the prediction apparatus for the target object described above may be implemented wholly or partially by software, hardware, or a combination thereof. The above modules may be embedded in or independent of a processor in a computer device in the form of hardware, or stored in a memory in the computer device in the form of software, so that the processor can call and execute the operations corresponding to the above modules.

Please refer to FIG. 7. The embodiments of the description further provide a computer device 700, which includes a memory 710 and a processor 720. The memory 710 has a computer program 712 stored thereon, and the processor 720, when executing the computer program 712, implements the prediction method for the target object in the above embodiments.

The embodiments of the description further provide a computer-readable storage medium having a computer program stored thereon. The computer program, when executed by a computer, causes the computer to perform the prediction method for the target object in any one of the above embodiments.

The embodiments of the description further provide a computer program product including an instruction, which, when executed by a computer, causes the computer to perform the prediction method for the target object in any one of the above embodiments.

It should be understood that specific examples are set forth herein only to assist those skilled in the art in better understanding the embodiments of the description and are not intended to limit the scope of the description.

It should be understood that, in the various embodiments of the description, the sequence number of each process does not mean the order of execution, and the order of execution of each process should be determined by its function and inherent logic, and shall not limit the implementation process of the embodiments of the description in any way.

It should be understood that the various embodiments described in the description may be implemented individually or in combination, which is not limited by the embodiments of the description.

Unless otherwise defined, all technical and scientific terms used in the embodiments of the description have the same meaning as commonly understood by those of ordinary skill in the art to which the description belongs. The terms used in the description are for the purpose of describing specific embodiments only and are not intended to limit the scope of the description. The term "and/or" used herein includes any and all combinations of one or more of the associated listed items. The singular forms "a/an", "said", and "the" used in the embodiments of the description and the appended claims are intended to include the plural forms as well, unless otherwise clearly indicated in the context.

It is understood that the processor of the embodiments of the description may be an integrated circuit chip having a signal processing capability. In the implementation process, the steps of the above method embodiments may be performed by integrated logic circuits of hardware in a processor or by instructions in the form of software. The above processor may be a general-purpose processor, a digital signal processor (DSP), an application specific integrated circuit (ASIC), a field programmable gate array (FPGA) or other programmable logic devices, discrete gates or transistor logic devices, or discrete hardware components. The methods, steps, and logic block diagrams disclosed in the embodiments of the description can be implemented or performed. The general-purpose processor may be a microprocessor or the processor may be any conventional processor or the like. The steps of the methods disclosed in conjunction with the embodiments of the description can be directly embodied as performed by a hardware decoding processor or performed with a combination of hardware and software modules in a decoding processor. The software module can be located in a random access memory, a flash memory, a read-only memory, a programmable read-only memory, or an electrically rewritable programmable memory, a register, and other storage media well known in the art. The storage medium is located in the memory, and the processor reads the information in the memory and completes the steps of the above method in combination with its hardware.

It is understood that the memory in the embodiments of the description may be a volatile memory or a nonvolatile memory, or may include both a volatile memory and a nonvolatile memory. The nonvolatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM). It should be noted that the memories of the systems and methods described herein are intended to include, but are not limited to these and any other suitable types of memories.

Those of ordinary skill in the art will recognize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solutions. The skilled person may use different methods to implement the described functions for each particular application, but such implementations should not be considered outside the scope of the description.

It will be clear to those skilled in the field that, for the convenience and brevity of description, the specific working processes of the systems, apparatuses, and units described above can be referred to the corresponding processes in the preceding method embodiments and will not be repeated here.

In the several embodiments provided in the description, it should be understood that the disclosed systems, apparatuses, and methods can be implemented in other ways. For example, the apparatus embodiments described above are merely illustrative, for example, the division of the units described, which is only a logical functional division, can be practically implemented in another way. For example, a plurality of units or components may be combined or integrated into another system, or some features may be ignored or not performed. In another aspect, the mutual coupling or direct coupling or communication connection shown or discussed may be achieved through some interfaces. An indirect coupling or communication connection between apparatuses or units may be in electrical, mechanical, or other forms.

The units illustrated as separate components may or may not be physically separated, and the components displayed as units may or may not be physical units, that is, they may be located in one place or may be distributed to a plurality of network units. Some or all of these units may be selected according to practical needs to achieve the purpose of the embodiment solution.

In addition, the functional units in the embodiments of the description may be integrated into one processing unit, or each unit may be physically present separately, or two or more units may be integrated into one unit.

The function, if implemented in the form of a software functional module and sold or used as an independent product, may be stored in a computer-readable storage medium. Based on such understanding, the technical solutions of the description essentially can be, or part of the technical solutions contributing to the prior art can be, or part of the technical solutions can be embodied in the form of a software product. The computer software product is stored in a storage medium and includes several instructions for enabling a computer device (which can be a personal computer, a server, a network device, or the like) to implement all or part of the steps of the methods described in the embodiments of the description. The preceding storage medium includes a U-disk, a removable hard disk, a read-only memory (ROM), a random access memory (RAM), a magnetic disk, an optical disk, or other media capable of storing program codes.

What is described above is only specific embodiments of the description, but the protection scope of the present invention is not limited thereto. Those skilled in the art can easily think of changes or substitutions within the technical scope disclosed in the description, and these changes and substitutions shall fall within the protection scope of the description. Therefore, the protection scope of the present invention shall be subject to the protection scope of the claims.

**Claims**

1. A prediction method of a target object, comprising:

   performing a voxelization processing on point cloud data to obtain a plurality of voxels, wherein the plurality of voxels correspond to a plurality of points in the point cloud data, and at least a portion of the plurality of voxels forms a voxel set;
   extracting a plurality of voxel features from the voxels in the voxel set;
   mapping the plurality of voxel features to a plurality of points comprised in the plurality of voxels, respectively, to obtain a plurality of point features of the plurality of points; and
   predicting, according to the plurality of point features, the target object.

2. The method according to claim 1, wherein the step of performing the voxelization processing on the point cloud data to obtain the plurality of voxels comprises:

   dividing, according to a spatial coordinate range of the point cloud data, the point cloud data into the plurality of voxels by a specified resolution; and
   on the basis of the point cloud data, extracting initial voxel features of the plurality of voxels.

3. The method according to claim 2, wherein the step of extracting the plurality of voxel features from the voxels in the voxel set, comprises:
   inputting the initial voxel features into a preset sparse voxel encoder to extract the plurality of voxel features.

4. The method according to any one of claims 1-3, wherein the step of mapping the plurality of voxel features to the plurality of points comprised in the plurality of voxels, respectively, to obtain the plurality of point features of the plurality of points, comprise:

   mapping the voxel features of the voxels in the voxel set to points comprised in voxels corresponding to the voxel features to obtain initial point features;
   calculating geometric features between the points and centers of the voxels corresponding to the points; and
   on the basis of the initial point features and the geometric features, generating the point features of the points.

5. The method according to any one of claims 1-4, wherein the step of predicting, according to the plurality of point features, the target object comprises:

   predicting, on the basis of the plurality of point features, a plurality of points belonging to a foreground of the target object, to obtain a plurality of foreground points;
   performing a clustering processing on the plurality of foreground points to obtain a first prediction point set belonging to the target object, wherein the first prediction point set comprises a plurality of points corresponding to the target object;
   extracting point features of the plurality of points in the first prediction point set to obtain a first prediction point set feature; and
   on the basis of the first prediction point set feature, predicting the target object.

6. The method according to claim 5, wherein the step of predicting, on the basis of the plurality of point features, the plurality of points belonging to the foreground of the target object, to obtain the plurality of foreground points, comprises:

   predicting a type of a target object corresponding to the plurality of points by using the plurality of point features; and
   on the basis of the type of the target object, determining the plurality of foreground points.

7. The method according to claim 5, wherein the step of performing the clustering processing on the plurality of foreground points to obtain the first prediction point set belonging to the target object comprises:

   determining a plurality of center points representing the target object, wherein the center point represent a center of the target object to which the foreground points are predicted to belong;
   separately calculating distances among the plurality of center points; and
   adding at least one of the plurality of foreground points meeting a condition to the first prediction point set, wherein the condition is that the distances are less than or equal to a preset distance.

8. The method according to claim 5, wherein the step of extracting the point features of the plurality of the points in the first prediction point set to obtain the first prediction point set feature comprises:

   on the basis of a first weight coefficient, calculating a first instance feature of the points in the first prediction point data set; and
   on the basis of a relationship between the point features of the points in the first prediction point set and the first instance feature, obtaining a first target feature, wherein the first target feature is used as the first prediction point set feature.

9. The method according to claim 8, further comprising:

   on the basis of a second weight coefficient, calculating weighted coordinates of the points in the first prediction point set;
   determining difference between coordinates and the weighted coordinates of the points in the first prediction point set to obtain a second target feature; and
   fusing the first target feature and the second target feature to obtain a third target feature, wherein the third target feature is used as the first prediction point set feature.

10. The method according to claim 5, further comprising:

    on the basis of the first prediction point set feature, generating a prediction box indicating that an object is predicted to be the target object, wherein at least one of the plurality of foreground points within the prediction box is used as a second prediction point set;
    calculating a second instance feature of the points in the second prediction point set by using a third weight coefficient;
    on the basis of difference between the point features of the points in the second prediction point set and the second instance feature, obtaining a fourth target feature; and
    adjusting, according to the fourth target feature, the predicted target object.

11. A computer device comprising a memory and a processor, wherein the memory has a computer program stored thereon, and the processor, when executing the computer program, implements the method according to any one of claims 1-10.

12. A computer-readable storage medium having a computer program stored thereon, wherein the computer program, when executed by a processor, implements the method according to any one of claims 1-10.

FIG. 1

FIG. 2

FIG. 3

Performing voxelization processing on point cloud data to obtain a plurality of voxels, wherein the plurality of voxels correspond to a plurality of point data in the point cloud data, and at least a portion of the plurality of voxels forms a voxel set — S210

Extracting voxel features of the voxels in the voxel set to obtain a plurality of voxel features — S220

Mapping the plurality of voxel features to a plurality of point data included in the plurality of voxels, respectively, to obtain a plurality of point data features of the plurality of point data — S230

Predicting, according to the plurality of point data features, the target object — S240

FIG. 4

FIG. 5

600

Prediction apparatus for target object

Point cloud data voxelization
processing module ——— 610

Voxel feature extraction module ——— 620

Voxel feature mapping module ——— 630

Target object prediction module ——— 640

FIG. 6

Processor 720

System bus

Operating system

712 — Computer program

Nonvolatile storage
medium

710

Internal memory

Communication
interface

Display apparatus

Input apparatus

Computer device 700

FIG. 7

Europäisches
Patentamt
European
Patent Office
Office européen
des brevets

**EUROPEAN SEARCH REPORT**

Application Number

EP 23 18 4451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG TONGFENG ET AL: "Learning Scale-Adaptive Representations for Point-Level LiDAR Semantic Segmentation", 2021 INTERNATIONAL CONFERENCE ON 3D VISION (3DV), IEEE, 1 December 2021 (2021-12-01), pages 920-929, XP033999221, DOI: 10.1109/3DV53792.2021.00100 [retrieved on 2021-12-29] | 1-4,8-12 | INV. G06V10/44 G06V10/82 G06V20/58 G06V20/64 G06V10/77 |
| Y | * sections 1-3; page 920 - page 924 * | 5-7 | |
| X | YE MAOSHENG ET AL: "DRINet: A Dual-Representation Iterative Learning Network for Point Cloud Segmentation", 2021 IEEE/CVF INTERNATIONAL CONFERENCE ON COMPUTER VISION (ICCV), IEEE, 10 October 2021 (2021-10-10), pages 7427-7436, XP034093183, DOI: 10.1109/ICCV48922.2021.00735 [retrieved on 2022-02-10] | 1-4,8-12 | |
| Y | * sections 1-3; page 7427 - page 7432 * | 5-7 | TECHNICAL FIELDS SEARCHED (IPC) G06V |
| X | LIU ZHIJIAN ET AL: "PVNAS: 3D Neural Architecture Search With Point-Voxel Convolution", IEEE TRANSACTIONS ON PATTERN ANALYSIS AND MACHINE INTELLIGENCE, IEEE COMPUTER SOCIETY, USA, vol. 44, no. 11, 31 August 2021 (2021-08-31), pages 8552-8568, XP011922062, ISSN: 0162-8828, DOI: 10.1109/TPAMI.2021.3109025 [retrieved on 2021-09-01] | 1-4,8-12 | |
| Y | * sections 1-4; page 8552 - page 8556 * | 5-7 | |

-/--

The present search report has been drawn up for all claims

| Place of search | Date of completion of the search | Examiner |
|---|---|---|
| The Hague | 24 November 2023 | Chehade, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 23 18 4451

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AHMED SYEDA MARIAM ET AL: "Density-Based Clustering for 3D Object Detection in Point Clouds", 2020 IEEE/CVF CONFERENCE ON COMPUTER VISION AND PATTERN RECOGNITION (CVPR), IEEE, 13 June 2020 (2020-06-13), pages 10605-10614, XP033803440, DOI: 10.1109/CVPR42600.2020.01062 [retrieved on 2020-08-03] * sections 1-3; page 10605 - page 10610 * | 5-7 | |
| | | | **TECHNICAL FIELDS SEARCHED (IPC)** |

The present search report has been drawn up for all claims

| Place of search | Date of completion of the search | Examiner |
|---|---|---|
| The Hague | 24 November 2023 | Chehade, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)